# EUROPEAN PATENT SPECIFICATION

(11) **EP 3 037 483 B1**
(45) Date of publication and mention of the grant of the patent: **06.09.2017**
(21) Application number: 14837634.6
(22) Date of filing: 04.08.2014
(51) Int. Cl.: C08L 101/00, C08K 5/521

(54) **FLAME-RETARDANT SYNTHETIC RESIN COMPOSITION**
FLAMMWIDRIGE KUNSTHARZZUSAMMENSETZUNG
COMPOSITION DE RÉSINE DE SYNTHÈSE RETARDATRICE DE FLAMME

(30) Priority: 20.08.2013 JP 2013170354
(43) Date of publication of application: 29.06.2016
(73) Proprietor: Adeka Corporation, Tokyo 116-8554 (JP)
(72) Inventor: SAKURAI, Hisashi, Saitama-shi Saitama 336-0022 (JP); KOKURA, Genta, Saitama-shi Saitama 336-0022 (JP); KAMIMOTO, Tetsuo, Saitama-shi Saitama 336-0022 (JP)
(74) Representative: Forstmeyer, Dietmar
(86) International application number: PCT/JP2014/070473
(87) International publication number: WO 2015/025701

(56) References cited:
- JP-A- 2005 532 461
- JP-A- 2005 532 466
- JP-A- 2008 202 009
- JP-A- 2008 202 010
- JP-A- 2011 001 486
- JP-A- 2011 252 097
- JP-A- 2012 052 065
- US-A1- 2003 171 463
- US-A1- 2003 187 112

## Description

### TECHNICAL FIELD

This invention relates to a flame-retardant resin composition, more particularly a flame retardant resin composition containing specific phosphoric ester compounds and exhibiting excellent resin physical properties, such as heat deflection temperature and melt viscosity, as well as high flame retardancy.

### BACKGROUND ART

Synthetic resins are generally light and excellent in water resistance, chemical resistance, electrical insulation properties, and various mechanical properties and widely used as building materials, electric, electronic, and home appliance materials, automotive materials, fiber materials, and the like. On the other hand, synthetic resins are generally flammable and are made flame retardant by the addition of flame retardants, such as organic halogen compounds, inorganic hydrates, or phosphorus compounds, at the time of manufacturing resin molded products.

Of the above described flame retardants organic halogen compounds are used most widely because of their excellent flame retardation effect on a variety of synthetic resins. However, halogen-containing compounds thermally decompose during resin molding to generate a hydrogen halide, which contaminates the working environment, corrodes molds, or causes coloration or gelation of the resin. Moreover, upon combustion due to, for example, fire, the halogen compounds emit a large amount of smoke together with the corrosive and harmful hydrogen halide gas.

Inorganic hydrates, such as aluminum hydroxide and magnesium hydroxide, which are halogen-free, have a small flame retardant effect and should be added in large quantities in order to achieve sufficient flame retardation and consequently impair the original physical properties of the resins.

Organic phosphoric ester compounds among phosphorus compounds are used widely as flame retardants that are free from halogen and yet provide good flame retardation effects. Typical organic phosphoric ester compounds include triarylphosphoric esters, such as triphenyl phosphate (TPP), tricresyl phosphate (TCP), and trixylyl phosphate (TXP). The problem with these compounds resides in their relatively low boiling points. That is, they tend to vaporize while the resin is extruded or otherwise molded to contaminate the mold or bleed out to harm the appearance of resin molded products. Another problem is that they act as a plasticizer to cause great reduction of heat resistance of the resin compositions.

To address the problems, Patent Document 1 below proposes a solidified flame retardant that minimizes reduction of physical properties of the resin to which it is added as compared with a liquid flame retardant.

Patent Document 2 below discloses a polyester resin and/or polyamide resin composition containing a specific phosphoric ester compound and exhibiting excellent anti-bleeding properties.

Although these conventional techniques succeed in improving anti-bleeding properties, the proposed flame retardant reduces the heat deflection temperature, i.e., heat resistance of the resin or has an increased melt viscosity, which is detrimental to processability and handling properties. Solutions to these problems have been sought.

### CITATION LIST

### Patent Document

US-A-2003/0171463 discloses a flame retardant composition comprising a thermoplastic resin (e.g., polycarbonate) and a 4,4-biphenol phenylphosphate ester mixture, wherein more than 75% have n=1.

### SUMMARY OF THE INVENTION

### Problem to be Solved by the Invention

An object of the invention is to provide a flame-retardant resin composition having excellent flame retardancy, heat resistance in terms, e.g., of heat deflection temperature, and melt viscosity-related processability and handling properties.

Another object of the invention is to provide a resin molded product excellent in flame retardancy and heat resistance in terms, e.g., of heat deflection temperature.

### Means for Solving the Problem

As a result of intensive studies with a view to settling the above mentioned problems, the inventors have completed the present invention.

The invention provides a flame retardant synthetic resin composition comprising 100 parts by mass of a synthetic resin and 0.5 to 20 parts by mass of a mixture of phosphoric esters represented by general formula (1): 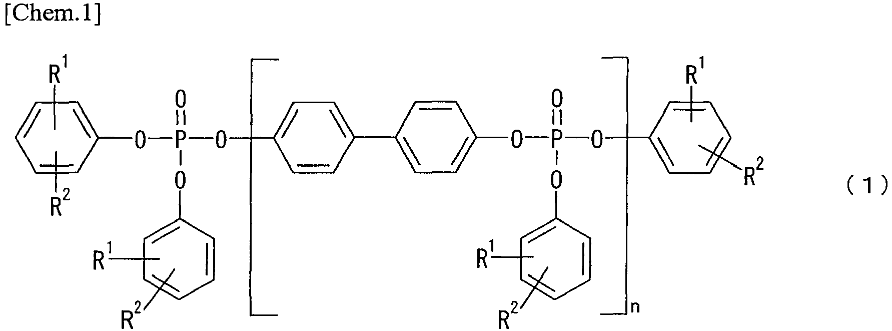
wherein R¹ and R² each independently represent a hydrogen atom or a methyl group; and n represents an integer of 1 to 5,
the mixture will hereinafter be also referred to as component (A). The mixture contains 70% to 75% by mass of a phosphoric ester of formula (1) wherein n = 1, with the total of phosphoric esters of formula (1) wherein n is 1 to 5 being taken as 100% by mass.

The invention provides a preferred embodiment of the flame retardant synthetic resin composition, in which R¹ and R² in formula (1) are each hydrogen.

The invention also provides another preferred embodiment of the flame retardant synthetic resin composition, wherein the synthetic resin is polycarbonate.

The invention also provides a molded product obtained from the flame retardant synthetic resin composition.

### Effect of the Invention

The invention provides a synthetic resin composition excellent in flame retardancy, heat resistance, processability, and handling properties and a molded product excellent in flame retardancy and heat resistance.

### BEST MODE FOR CARRYING OUT THE INVENTION

The flame retardant synthetic resin composition of the invention will be described in detail.

The description starts with component (A), the flame retardant component of the invention.

The flame retardant as component (A) is a mixture of phosphoric esters represented by general formula (1) shown below. The mixture contains 70% to 75% by mass of a phosphoric ester of formula (1) wherein n = 1 based on the total of phosphoric esters of formula (1) wherein n is 1 to 5. The mixture does not necessarily contain all the phosphoric esters wherein n is 2, 3, 4, and 5.

If the proportion of the compound wherein n = 1 in the mixture exceeds 75 mass%, the synthetic resin composition will have a reduced heat deflection temperature, i.e., reduced heat resistance. If it is less than 70 mass%, the phosphoric ester mixture has an increased melt viscosity, which will impair the processability and handling properties of the resin composition. 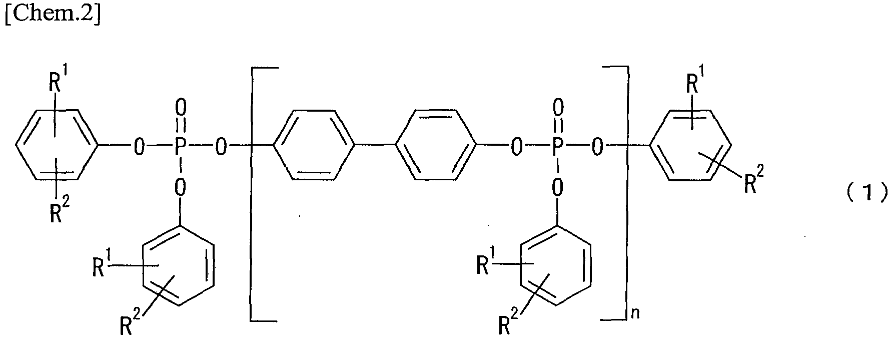 wherein R¹ and R² each independently represent a hydrogen atom or a methyl group; and n represents an integer of 1 to 5.

In general formula (1), R¹ and R² are each preferably a hydrogen atom from the viewpoint of flame retardation, heat deflection temperature, and melt viscosity of the synthetic resin composition.

Examples of the phosphoric ester represented by general formula (1) include phosphoric ester Nos. 1 and 2 shown below. In particular, phosphoric ester No. 1 is preferred in view of flame retardation, heat deflection temperature, and melt viscosity of the synthetic resin composition. In formulae below, n is as defined above.

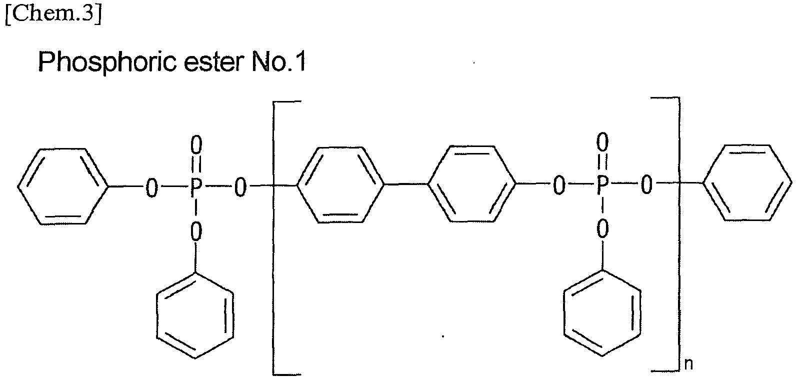

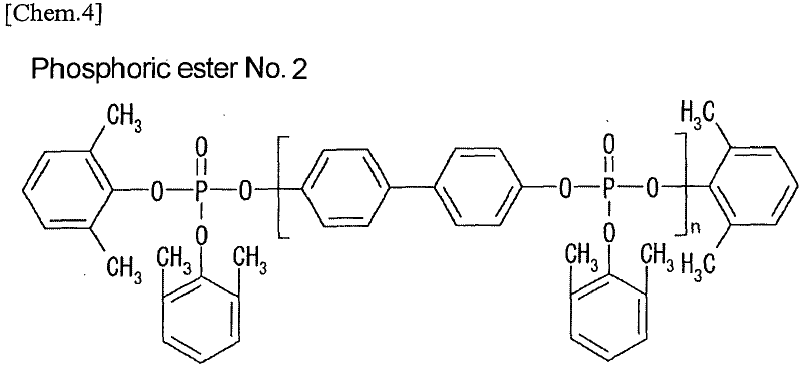

The method for synthesizing the mixture of phosphoric esters represented by general formula (1) is not particularly limited. For example, the mixture may be prepared by allowing 4,4'-dihydroxybiphenyl, phenol, and phosphorus oxychloride to react in the presence of a catalyst, such as magnesium chloride, to cause dehydrochlorination. The proportion of the phosphoric ester wherein n = 1 is adjustable to 70 to 75 mass% by properly selecting the ratio of the phosphorus oxychloride to 4,4'-dihydroxybiphenyl. The phosphorus oxychloride is preferably used in an amount of 2.70 to 3.00 mol, more preferably 2.90 mol, per mole of 4,4'-dihydroxybiphenyl.

The flame retardant synthetic resin composition of the invention contains 0.5 to 20 parts by mass of the mixture of phosphoric ester compounds of formula (1) (component (A)) per 100 parts by mass of a synthetic resin. The content of component (A) is preferably 1 to 15 parts, more preferably 2 to 5 parts, by mass in terms of flame retardation, heat deflection temperature, and melt viscosity. Less than 0.5 parts of component (A) fails to achieve sufficient flame retardation. More than 20 parts of component (A) causes bleeding.

Component (A) according to the invention is liquid and has flowability at 70 to 80°C, preferably at room temperature (25°C).

The manner of adding component (A) to a synthetic resin is not particularly limited. When component (A) is liquid at room temperature (25°C), it is easy to handle. When component (A) is not liquid at room temperature (25°C) or when it is desired to increase flowability of liquid component (A) to improve handling, component (A) may be heated when added.

The synthetic resin that can be used in the invention will next be described.

The synthetic resin for use in the invention is exemplified by thermoplastic resins. Examples of suitable thermoplastic resins are polyolefin resins, including α-olefin polymers, such as polypropylene, high density polyethylene, low density polyethylene, linear low density polyethylene, crosslinked polyethylene, ultrahigh molecular weight polyethylene, polybutene-1, poly-3-methylpentene, and poly-4-methylpentene, and olefin copolymers, such as ethylene-vinyl acetate copolymers, ethylene-ethyl acrylate copolymers, and ethylene-propylene copolymers; halogen-containing resins, such as polyvinyl chloride, polyvinylidene chloride, chlorinated polyethylene, chlorinated polypropylene, polyvinylidene fluoride, chlorinated rubber, vinyl chloride-vinyl acetate copolymers, vinyl chloride-ethylene copolymers, vinyl chloride-vinylidene chloride copolymers, vinyl chloride-vinylidene chloride-vinyl acetate terpolymers, vinyl chloride-acrylic ester copolymers, vinyl chloride-maleic ester copolymers, and vinyl chloride-cyclohexylmaleimide copolymers; petroleum resins, coumarone resins, polystyrene, high impact polystyrene (HIPS), polyvinyl acetate, acrylic resins, copolymers of styrene and/or α-methylstyrene and other monomer(s) (e.g., maleic anhydride, phenylmaleimide, methyl methacrylate, butadiene, and acrylonitrile), such as AS resins, ABS resins, ACS resins, SBS resins, MBS resins, and heat resistant ABS resins; polymethyl methacrylate, polyvinyl alcohol, polyvinyl formal, polyvinyl butyral; aromatic polyester resins, including polyalkylene terephthalates, such as polyethylene terephthalate, polybutylene terephthalate, and polycyclohexanedimethylene terephthalate, polyalkylene naphthalates, such as polyethylene naphthalate and polybutylene naphthalate, and linear polyester resins, such as polytetramethylene terephthalate; degradable aliphatic polyesters, such as polyhydroxybutyrate, polycaprolactone, polybutylene succinate, polyethylene succinate, polylactic acid, polymalic acid, polyglycolic acid, polydioxane, and poly(2-oxetanone); polyamide resins, such as polyphenylene oxide, polycaprolactam, and polyhexamethylene adipamide; cellulose ester resins, such as cellulose acetate, cellulose propionate, cellulose butyrate, cellulose acetate propionate, and cellulose acetate butyrate; thermoplastic resin, such as polycarbonate, polycarbonate/ABS resins, branched polycarbonate, polyacetal, polyphenylene sulfide, polyurethane, cellulose resins, polyimide resins, polyether sulfone (PES), polysulfone, polyphenylene ethers, polyether ketones, polyether ether ketones, and liquid crystal polymers; and polyblends of these resins.

Further included in the synthetic resins usable in the invention are thermosetting resins, such as phenol resins, urea resins, melamine resins, epoxy resins, and unsaturated polyester resins; fluororesins, and silicone resins.

Also useful are elastomers, including isoprene rubber, butadiene rubber, acrylonitrile-butadiene copolymer rubber, styrene-butadiene copolymer rubber, fluororubber, silicone rubber, olefin elastomers, styrene elastomers, polyester elastomers, nitrile elastomers, nylon elastomers, vinyl chloride elastomers, polyamide elastomers, and polyurethane elastomers.

These synthetic resins may be used either individually or in combination of two or more thereof. They may be used in the form of polymer alloy.

The above described synthetic resins may be used irrespective of molecular weight, degree of polymerization, density, softening point, solvent-insoluble content, degree of stereoregularity, presence or absence of catalyst residue, type and compounding ratio of monomers, type of catalyst for polymerization (e.g., Ziegler type or metallocene type), and the like.

Preferred of the synthetic resins described is at least one member selected from the group consisting of polycarbonate, ABS resins, high impact polystyrene, polyester resins, polyamide resins, polyphenylene ethers, cellulose ester resins, and their copolymers from the viewpoint of flame retardation, heat resistance in terms, e.g., of heat deflection temperature, and melt viscosity-related processability and handling properties. Polycarbonate is particularly preferred.

In order to prevent dripping on combustion, it is preferred for the flame retardant synthetic resin composition of the invention to contain an anti-drip agent within a range that does not impair the effects of the invention.

Examples of useful anti-drip agents include fluorine-containing compounds, silicone rubber, and sheet silicates, with fluorine-containing compounds being preferred.

Examples of the fluorine-containing anti-drip agent include fluororesins, such as polytetrafluoroethylene, polyvinylidene fluoride, and polyhexafluoropropylene; and perfluoroalkanesulfonic acid alkali metal or alkaline earth metal salts, such as sodium perfluoromethanesulfonate, potassium perfluoro-n-butanesulfonate, potassium perfluoro-t-butanesulfonate, sodium perfluorooctanesulfonate, and calcium perfluoro-2-ethylhexanesulfonate. Polytetrafluoroethylene is particularly preferred for its anti-dripping performance.

Examples of the sheet silicates include smectite clay, such as montmorillonite, saponite, hectorite, beidellite, stevensite, and nontronite, vermiculite, halloysite, swelling mica, and talk. The sheet silicate may have an organic cation, a quaternary ammonium cation, or a phosphonium cation pre-intercalated between the layers thereof.

The content of the anti-drip agent is preferably 0.005 to 3 parts, more preferably 0.01 to 2 parts, even more preferably 0.05 to 1.0 parts, still even more preferably 0.1 to 0.5 parts, by mass per 100 parts by mass of the synthetic resin. Less than 0.005 parts of the anti-drip agent may fail to produce a sufficient anti-drip effect. More than 3 parts of the anti-drip agent can reduce the characteristics of the resin.

If desired, the flame retardant synthetic resin composition of the invention may further contain a halogen-free, organic or inorganic flame retardant or flame retardant aid within a range that does not ruin the effects of the invention. Examples of such a flame retardant or flame retardant aid include triazine ring-containing compounds, metal hydroxides, phosphoric ester flame retardants, condensed phosphoric ester flame retardants, phosphate flame retardants, inorganic phosphorus flame retardants, (poly)phosphate flame retardants, dialkylphosphinates, silicone flame retardants, metal oxides, boric acid compounds, swelling graphite, and other organic or inorganic flame retardant aids.

Examples of the triazine ring-containing compounds are melamine, ammeline, benzoguanamine, acetoguanamine, phthalodiguanamine, melamine cyanurate, butylene diguanamine, norbornene diguanamine, methylene dimelamine, ethylene dimelamine, trimethylene dimelamine, tetramethylene dimelamine, hexamethylene dimelamine, and 1,3-hexylene dimelamine.

Examples of the metal hydroxide include magnesium hydroxide, aluminum hydroxide, calcium hydroxide, barium hydroxide, zinc hydroxide, and KISUMA 5A (trade name of magnesium hydroxide manufactured by Kyowa Chemical industry Co., Ltd.).

Examples of the phosphoric ester flame retardants include trimethyl phosphate, triethyl phosphate, tributyl phosphate, tributoxyethyl phosphate, trischloroethyl phosphate, trisdichloropropyl phosphate, triphenyl phosphate, tricresyl phosphate, cresyl diphenyl phosphate, trixylenyl phosphate, octyl diphenyl phosphate, xylenyl diphenyl phosphate, trisisopropyl phenyl phosphate, 2-ethylhexyl diphenyl phosphate, t-butylphenyl diphenyl phosphate, bis(t-butylphenyl) phenyl phosphate, tris(t-butylphenyl) phosphate, isopropyl phenyl diphenyl phosphate, bis(isopropylphenyl) diphenyl phosphate, and tris(isopropylphenyl) phosphate.

Examples of the condensed phosphoric ester flame retardants include 1, 3-phenylenebis(diphenyl phosphate), 1,3-phenylenebis(dixylenyl phosphate), and bisphenol A bis(diphenyl phosphate).

Examples of the inorganic phosphorus flame retardants include red phosphorus.

Examples of the (poly)phosphate flame retardants include ammonium salts and amine salts of (poly)phosphoric acids, such as ammonium polyphosphate, melamine polyphosphate, piperazine polyphosphate, melamine pyrophosphate, and piperazine pyrophosphate.

Examples of the dialkylphosphinates include aluminum diethylphosphinate and zinc diethylphosphinate.

Examples of the other inorganic flame retardant aids include inorganic compounds, such as zinc oxide, titanium oxide, aluminum oxide, magnesium oxide, and hydrotalcite, and surface-treated products of these inorganic compounds. Commercially available products of these inorganic flame retardant aids may be used, including TIPAQUE R-680 (titanium oxide from Ishihara Sangyo Kaisha, Ltd.), KYOWAMAG 150 (magnesium oxide from Kyowa Chemical industry Co., Ltd.), DHT-4A (hydrotalcite from Kyowa Chemical industry Co., Ltd.), and Alcamizer 4 (zinc-modified hydrotalcite from Kyowa Chemical industry Co., Ltd.).

Examples of the other organic flame retardant aids include pentaerythritol, dipentaerythritol, and polypentaerythritol.

Where necessary, the flame retardant synthetic resin composition of the invention may contain phenol antioxidants, phosphorus antioxidants, thioether antioxidants, ultraviolet absorbers, hindered amine light stabilizers, other anti-aging agents, and so forth. It is preferable to stabilize the synthetic resin by the addition of such additives.

Examples of the phenol antioxidants include 2,6-di(tert-butyl)-p-cresol, 2,6-diphenyl-4-octadecyloxyphenol, distearyl (3,5-di-tert-butyl-4-hydroxybenzyl) phosphonate, 1,6-hexamethylenebis[(3, 5-di-tert-butyl-4-hydroxyphenyl) propionamide], 4,4'-thiobis(6-tert-butyl-m-cresol), 2,2'-methylenebis(4-methyl-6-tert-butylphenol), 2,2'-methylenebis(4-ethyl-6-tert-butylphenol), 4,4'-butylidenebis(6-tert-butyl-m-cresol), 2,2'-ethylidenebis(4,6-di-tert-butylphenol), 2,2'-ethylidenebis(4-sec-butyl-6-tert-butylphenol), 1,1,3-tris(2-methyl-4-hydroxy-5-tert-butylphenyl) butane, 1,3,5-tris(2,6-dimethyl-3-hydroxy-4-tert-butylbenzyl) isocyanurate, 1,3,5-tris(3, 5-di-tert-butyl-4-hydroxybenzyl) isocyanurate, 1,3,5-tris(3,5-di-tert-butyl-4-hydroxybenzyl)-2,4,6-trimethylbenzene, 2-tert-butyl-4-methyl-6-(2-acryloyloxy-3-tert-butyl-5-methylbenzyl)phenol, stearyl (3, 5-di-tert-butyl-4-hydroxyphenyl) propionate, tetrakis[methyl 3-(3,5-di-tert-butyl-4-hydroxyphenyl) propionate]methane, thiodiethylene glycol bis[(3,5-di-tert-butyl-4-hydroxyphenyl) propionate], 1,6-hexamethylenebis[(3,5-di-tert-butyl-4-hydroxyphenyl) propionate], bis[3,3-bis(4-hydroxy-3-tert-butylphenyl) butyric acid] glycol ester, bis[2-tert-butyl-4-methyl-6-(2-hydroxy-3-tert-butyl-5-methylbenzyl)phenyl] terephthalate, 1,3,5-tris[(3,5-di-tert-butyl-4-hydroxyphenyl) propionyloxyethyl] isocyanurate, 3, 9-bis[1,1-dimethyl-2-{(3-tert-butyl-4-hydroxy-5-methylphenyl) propionyloxy} ethyl]-2,4,8,10-tetraoxaspiro[5,5]undecane, and triethylene glycol bis[(3-tert-butyl-4-hydroxy-5-methylphenyl) propionate].

The amount of the phenol antioxidant to be added is preferably 0.001 to 10 parts by mass, more preferably 0.05 to 5 parts by mass per 100 parts by mass of the synthetic resin.

Examples of the phosphorus antioxidants include trisnonylphenyl phosphite, tris[2-tert-butyl-4-(3-tert-butyl-4-hydroxy-5-methylphenylthio)-5-methylphenyl] phosphite, tridecyl phosphite, octyl diphenyl phosphite, di(decyl) monophenyl phosphite, di(tridecyl) pentaerythritol diphosphite, di(nonylphenyl) pentaerythritol diphosphite, bis(2,4-di-tert-butylphenyl) pentaerythritol diphosphite, bis(2,6-di-tert-butyl-4-methylphenyl) pentaerythritol diphosphite, bis(2,4,6-tri-tert-butylphenyl) pentaerythritol diphosphite, bis(2,4-dicumylphenyl) pentaerythritol diphosphite, tetra(tridecyl) isopropylidenediphenol diphosphite, tetra(tridecyl)-4,4'-n-butylidenebis(2-tert-butyl-5-methylphenol) diphosphite, hexa(tridecyl)-1,1,3-tris(2-methyl-4-hydroxy-5-tert-butylphenyl) butane triphosphite, tetrakis(2, 4-di-tert-butylphenyl) biphenylene diphosphonite, 9,10-dihydro-9-oxa-10-phosphaphenanthrene-10-oxide, 2,2'-methylenebis(4,6-tert-butylphenyl)-2-ethylhexyl phosphite, 2, 2'-methylenebis(4,6-tert-butylphenyl)-octadecyl phosphite, 2,2'-ethylidenebis(4, 6-di-tert-butylphenyl) fluorophosphite, tris(2-[(2,4,8,10-tetrakis-tert-butyldibenzo[d,f][1,3,2] dioxaphosphepin-6-yl)oxy]ethyl)amine, and a phosphite of 2-ethyl-2-butylpropylene glycol and 2,4,6-tri-tert-butylphenol.

The amount of the phosphorus antioxidant to be used is preferably 0.001 to 10 parts by mass, more preferably 0.05 to 5 parts by mass, per 100 parts by mass of the synthetic resin.

Examples of the thioether antioxidants include dialkyl thiodipropionates, such as dilauryl thiodipropionate, dimyristyl thiodipropionate, and distearyl thiodipropionate; and pentaerythritol tetrakis(β-alkylthiopropionates), such as pentaerythritol tetrakis(β-dodecylthiopropionate).

The amount of the thioether antioxidant to be used is preferably 0.001 to 10 parts by mass, more preferably 0.05 to 5 parts by mass, per 100 parts by mass of the synthetic resin.

Examples of the ultraviolet absorbers include 2-hydroxybenzophenones, such as 2,4-dihydroxybenzophenone, 2-hydroxy-4-methoxybenzophenone, 2-hydroxy-4-octoxybenzophenone, and 5,5'-methylenebis(2-hydroxy-4-methoxybenzophenone); 2-(2'-hydroxyphenyl)benzotriazoles, such as 2-(2'-hydroxy-5'-methylphenyl)benzotriazole, 2-(2'-hydroxy-3',5'-di-tert-butylphenyl)-5-chlorobenzotriazole, 2-(2'-hydroxy-3'-tert-butyl-5'-methylphenyl)-5-chlorobenzotriazole, 2-(2'-hydroxy-5'-tert-octylphenyl)benzotriazole, 2-(2'-hydroxy-3',5'-dicumylphenyl)benzotriazole, 2,2'-methylenebis(4-tert-octyl-6-(benzotriazolyl)phenol), and 2-(2'-hydroxy-3'-tert-butyl-5'-carboxyphenyl)benzotriazole; benzoates, such as phenyl salicylate, resorcinol monobenzoate, 2,4-di-tert-butylphenyl-3,5-di-tert-butyl-4-hydroxybenzoate, 2, 4-di-tert-amylphenyl-3, 5-di-tert-butyl-4-hydroxybenzoate, and hexadecyl-3, 5-di-tert-butyl-4-hydroxybenzoate; substituted oxanilides, such as 2-ethyl-2'-ethoxyoxanilide and 2-ethoxy-4'-dodecyloxanilide; cyanoacrylates, such as ethyl α-cyano-β,β-diphenylacrylate and methyl 2-cyano-3-methyl-3-(p-methoxyphenyl)acrylate; and triaryltriazines, such as 2-(2-hydroxy-4-octoxyphenyl)-4,6-bis(2,4-di-tert-butylphenyl)-s-triazine, 2-(2-hydroxy-4-methoxyphenyl)-4,6-diphenyl-s-triazine, and 2-(2-hydroxy-4-propoxy-5-methylphenyl)-4,6-bis(2,4-di-tert-butylphenyl)-s-triazine. The amount of the ultraviolet absorber to be used is preferably 0.001 to 10 parts by mass, more preferably 0.05 to 5 parts by mass, per 100 parts by mass of the synthetic resin.

Examples of the hindered amine light stabilizers include 2,2,6,6-tetramethyl-4-piperidyl stearate, 1,2,2,6,6-pentamethyl-4-piperidyl stearate, 2,2,6,6-tetramethyl-4-piperidyl benzoate, bis(2,2,6,6-tetramethyl-4-piperidyl) sebacate, bis(1,2,2,6,6-tetramethyl-4-piperidyl) sebacate, bis(1-octoxy-2,2,6,6-tetramethyl-4-piperidyl) sebacate, tetrakis(2,2,6,6-tetramethyl-4-piperidyl)-1,2,3,4-butanetetracarboxylate, tetrakis(1,2,2,6,6-pentamethyl-4-piperidyl)-1,2,3,4-butanetetracarboxylate, bis(2,2,6,6-tetramethyl-4-piperidyl) di(tridecyl)-1,2,3,4-butanetetracarboxylate, bis(1,2,2,6,6-pentamethyl-4-piperidyl) di(tridecyl)-1,2,3,4-butanetetracarboxylate, bis(1,2,2,4,4-pentamethyl-4-piperidyl)-2-butyl-2-(3,5-di-tert-butyl-4-hydroxybenzyl)ma lonate, 1-(2-hydroxyethyl)-2,2,6,6-tetramethyl-4-piperidinol/diethyl succinate polycondensate, 1,6-bis(2,2,6,6-tetramethyl-4-piperidylamino)hexane/2,4-dichloro-6-morpholino-s-triazi ne polycondensate, 1,6-bis(2,2,6,6-tetramethyl-4-piperidylamino)hexane/2,4-dichloro-6-tert-octylamino-s-tr iazine polycondensate, 1,5,8,12-tetrakis[2,4-bis(N-butyl-N-(2,2,6,6-tetramethyl-4-piperidyl)amino)-s-triazin-6-yl]-1,5,8,12-tetraazadodecane, 1,5,8,12-tetrakis[2,4-bis(N-butyl-N-(1,2,2,6,6-pentamethyl-4-piperidyl)amino)-s-triazin -6-yl]-1,5,8,12-tetraazadodecane, 1,6,11-tris[2,4-bis(N-butyl-N-(2,2,6,6-tetramethyl-4-piperidyl)amino)-s-triazin-6-yl]ami noundecane, and 1,6,11-tris[2,4-bis(N-butyl-N-(1,2,2,6,6-pentamethyl-4-piperidyl)amino)-s-triazin-6-yl]a minoundecane.

The amount of the hindered amine light stabilizer to be used is preferably 0.001 to 10 parts by mass, more preferably 0.05 to 5 parts by mass, per 100 parts by mass of the synthetic resin.

Examples of the anti-aging agents include naphthylamines, diphenylamines, p-phenyldiamines, quinolines, hydroquinone derivatives, monophenols, thiobisphenols, hindered phenols, and phosphite esters.

The amount of the anti-aging agent to be added is preferably 0.001 to 10 parts by mass, more preferably 0.05 to 5 parts by mass, per 100 parts by mass of the synthetic resin.

The flame retardant synthetic resin composition of the invention may optionally be combined with a reinforcing material within a range that does not impair the effects of the invention. The reinforcing material may have a fibrous, plate-like, granular, or powder form as is usual for application to synthetic resins. Specific examples of useful reinforcing materials include inorganic fibrous reinforcing materials, such as glass fiber, asbestos fiber, carbon fiber, graphite fiber, metal fiber, potassium titanate whisker, aluminum borate whisker, magnesium whisker, silicon whisker, wollastonite, sepiolite, asbestos, slag fiber, zonolite, ellestadite, gypsum fiber, silica fiber, silica alumina fiber, zirconia fiber, boron nitride fiber, silicon nitride fiber, and boron fiber; organic fibrous reinforcing materials, such as polyester fiber, nylon fiber, acrylic fiber, regenerated cellulose fiber, acetate fiber, kenaf, ramie, cotton, jute, hemp, sisal, flax, silk, Manila fiber, sugarcane, wooden pulp, waste paper, used paper, and wool; and plate-like or granular reinforcing materials, such as glass flake, non-swellable mica, graphite, metal foil, ceramic beads, clay, mica, sericite, zeolite, bentonite, dolomite, kaolin, silicic acid powder, feldspar powder, potassium titanate, shirasu balloon, calcium carbonate, magnesium carbonate, barium sulfate, calcium oxide, aluminum oxide, titanium oxide, aluminum silicate, silicon oxide, gypsum, novaculite, dawsonite, and white clay.

The reinforcing material may have been coated or sized with a thermoplastic resin, such as an ethylene-vinyl acetate copolymer, or a thermosetting resin, such as an epoxy resin, or may have been treated with a coupling agent, such as an aminosilane or an epoxysilane.

The flame retardant polyolefin resin composition of the invention may optionally contain a crystal nucleating agent within a range that does not affect the effects of the invention. Any crystal nucleating agents commonly employed for polymers may be used as appropriate. In the invention, either of an inorganic crystal nucleating agent and an organic crystal nucleating agent may be used.

Examples of the inorganic crystal nucleating agent include metal salts, such as kaolinite, synthesized mica, clay, zeolite, silica, graphite, carbon black, magnesium oxide, titanium oxide, calcium sulfide, boron nitride, calcium carbonate, barium sulfate, aluminum oxide, neodymium oxide, and phenyl phosphonate. These inorganic crystal nucleating agents may be modified with an organic substance so as to have improved dispersibility in the composition.

Examples of the organic nucleating agent include metal salts of organic carboxylic acids, such as sodium benzoate, potassium benzoate, lithium benzoate, calcium benzoate, magnesium benzoate, barium benzoate, lithium terephthalate, sodium terephthalate, potassium terephthalate, calcium oxalate, sodium laurate, potassium laurate, sodium myristate, potassium myristate, calcium myristate, sodium octacosanoate, calcium octacosanoate, sodium stearate, potassium stearate, lithium stearate, calcium stearate, magnesium stearate, barium stearate, sodium montanate, calcium montanate, sodium toluate, sodium salicylate, potassium salicylate, zinc salicylate, aluminum dibenzoate, potassium dibenzoate, lithium dibenzoate, sodium β-naphthalate, and sodium cyclohexanecarboxylate; organic sulfonic acid salts, such as sodium p-toluenesulfonate and sodium sulfoisophthalate; carboxylic amides, such as stearamide, ethylenebislauramide, palmitamide, hydroxystearamide, erucamide, and trimesic acid tris(tert-butyramide); benzylidenesorbitol and its derivatives, metal salts of phosphorus compounds, such as sodium 2,2'-methylenebis(4,6-di-tert-butylphenyl)phosphate; and sodium 2,2-methylbis(4,6-di-tert-butylphenyl).

The flame retardant synthetic resin composition of the invention may optionally contain a plasticizer within a range that the does not impair the effects of the invention. Any plasticizers that are commonly used for polymers may be used as appropriate, including polyester plasticizers, glycerol plasticizers, polycarboxylic ester plasticizers, polyalkylene glycol plasticizers, and epoxy plasticizers.

Examples of the polyester plasticizers include those formed of and acid component, such as adipic acid, sebacic acid, terephthalic acid, isophthalic acid, naphthalenedicarboxylic acid, diphenyldicarboxylic acid, or rosin, and a diol component, such as propylene glycol, 1,3-butanediol, 1,4-butanediol, 1,6-hexanediol, ethylene glycol, or diethylene glycol; and those composed of a hydroxycarboxylic acid, such as polycaprolactone. These polyesters may be terminated with a monofunctional carboxylic acid or a monofunctional alcohol, or may be terminated with an epoxy compound.

Examples of the glycerol plasticizers include glycerol monoacetomonolaurate, glycerol diacetomonolaurate, glycerol monoacetomonostearate, glycerol diacetomonooleate, and glycerol monoacetomonomontanate.

Examples of the polycarboxylic ester plasticizer include phthalates, such as dimethyl phthalate, diethyl phthalate, dibutyl phthalate, dioctyl phthalate, diheptyl phthalate, dibenzyl phthalate, and butyl benzyl phthalate; trimellitates, such as tributyl trimellitate, trioctyl trimellitate, and trihexyl trimellitate; adipates, such as diisodecyl adipate, n-octyl n-decyl adipate, methyl diglycol butyl diglycol adipate, benzyl methyl diglycol adipate, and benzyl butyl diglycol adipate; citrates, such as triethyl acetylcitrate and tributyl acetylcitrate; azelates, such as di-2-ethylhexyl azelate; and sebacates, such as dibutyl sebacate and di-2-ethylhexyl sebacate.

Examples of the polyalkylene glycol plasticizers include polyalkylene glycols, such as polyethylene glycol, polypropylene glycol, a poly(ethylene oxide-propylene oxide) block and/or random copolymer, polytetramethylene glycol, ethylene oxide addition polymers of bisphenols, propylene oxide addition polymers of bisphenols, and tetrahydrofuran addition polymers of bisphenols; and their terminal-blocked compounds, such as terminal epoxy-modified compounds, terminal ester-modified compounds, and terminal ether-modified compounds.

The term "epoxy plasticizer" generally refers to epoxy triglycerides composed of epoxy alkyl stearate and soy bean oil. What we call epoxy resins prepared mainly from bisphenol A and epichlorohydrin are also useful..

Examples of other useful plasticizers include benzoates of aliphatic polyols, such as neopentylglycol dibenzoate, diethylene glycol dibenzoate, and triethylene glycol di-2-ethylbutyrate, fatty acid amides, such as stearamide, aliphatic carboxylic esters, such as butyl oleate, oxyacid esters, such as methyl acetylricinolate and butyl acetylricinolate, pentaerythritol, sorbitols, polyacrylates, and paraffins.

The above described plasticizers, if used, may be used either individually or in combination of two or more thereof.

The flame retardant synthetic resin composition of the invention may optionally contain a lubricant within a range that does not impair the effects of the invention. Any lubricants commonly used for synthetic resins may be used, including hydrocarbons, fatty acids, aliphatic alcohols, aliphatic esters, aliphatic amides (e.g., ethylenebisstearamide), aliphatic carboxylic metal acid salts (e.g., calcium stearate), other metal soaps, and silicone oils.

The flame retardant synthetic resin composition of the invention may optionally contain a hydrolysis inhibitor (hydrolysis resisting agent) within a range that does not impair the effects of the invention. Any hydrolysis inhibitors commonly used for synthetic resins may be employed, including carbodiimide compounds, isocyanate compounds, and oxazoline compounds.

The carbodiimide compounds are compounds having at least one carbodiimide group per molecular and include bifunctional and higher functional polycarbodiimide compounds. Examples of monocarbodiimide compounds include dicylohexylcarbodiimide, diisopropylcarbodiimide, dimethylcarodiimide, diisobutylcarbodiimide, dioctylcarbodiimide, diphenylcarbodiimide, and naphthylcarbodiimide.

Examples of the polycarbodiimide compounds include poly(dicyclohexylcarbodiimide), poly(isopropylcarbodiimide), poly(dimethylcarbodiimide), poly(diisobutylcarbodiimide), poly(dioctylcarbodiimide), poly(4,4'-diphenylmethanecarbodiimide), poly(3,3'-dimethyl-4,4'-diphenylmethanecarbodiimide), poly(tolylcarbodiimide), poly(p-phenylenecarbodiimide, poly(m-phenylenecarbodiimide), poly(1,3-diisopropylphenylenecarbodiimide), poly(1-methyl-3,5-diisopropylphenylenecarbodiimide), poly(1,3,5-triethylphenylenecarbodiimide), poly(triisopropylphenylenecarbodiimide), and poly(naphthylcarbodiimide). These compounds may be used in combination of two or more thereof.

Examples of the isocyanate compounds include 2,4-tolylene diisocyanate, 2,6-tolylene diisocyanate, m-phenylene diisocyanate, p-phenylene diisocyanate, 4,4'-diphenylmethane diisocyanate, 2,4'-diphenylmethane diisocyanate, 2,2'-diphenylmethane diisocyanate, 3,3'-dimethyl-4,4'-biphenylene diisocyanate, 3,3'-dimethoxy-4,4'-biphenylene diisocyanate, 3,3'-dichloro-4,4'-biphenylene diisocyanate, 1,5-naphthalene diisocyanate, 1,5-tetrahydronaphthalene diisocyanate, tetramethylene diisocyanate, 1,6-hexamethylene diisocyanate, dodecamethylene diisocyanate, trimethylhexamethylene diisocyanate, 1,3-cyclohexylene diisocyanate, 1,4-cyclohexylene diisocyanate, xylylene diisocyanate, tetramethylxylylene diisocyanate, hydrogenated xylylene diisocyanate, lysine diisocyanate, isophorone diisocyanate, 4,4'-dicyclohexylmethane diisocyanate, and 3,3'-dimethyl-4,4'-dicyclohexylmethane diisocyanate.

Examples of the oxazoline compounds include 2,2'-o-phenylenebis(2-oxazoline), 2,2'-m-phenylenebis(2-oxazoline), 2,2'-p-phenylenebis(2-oxazoline), 2,2'-p-phenylenebis(4-methyl-2-oxazoline), 2,2'-m-phenylenebis(4-methyl-2-oxazoline), 2,2'-p-phenylenebis(4,4'-dimethyl-2-oxazoline), 2,2'-m-phenylenebis(4,4'-dimethyl-2-oxazoline), 2,2'-ethylenebis(2-oxazoline), 2,2'-tetramethylenebis(2-oxazoline), 2;2'-hexamethylenebis(2-oxazoline), 2,2'-octamethylenebis(2-oxazoline), 2,2'-ethylenebis(4-methyl-2-oxazoline), and 2,2'-diphenylenebis(2-oxazoline). These hydrolysis inhibitors (hydrolysis resisting agents) may be used either individually or in combination of two or more thereof.

If desired, the flame retardant synthetic resin composition of the invention may contain additives commonly used for synthetic resins as long as the effects of the invention are not impaired. Useful additives include crosslinking agents, antistatics, metal soaps, fillers, antifogging agents, anti-plate-out agents, surface treating agents, fluorescent agents, antifungals, bactericides, foaming agents, metal inactivators, parting agents, pigments, processing aids, fluidity improvers, thickeners, thixotropic agents, fumed silica, and so forth.

The flame retardant synthetic resin composition of the invention can be molded to provide molded products excellent in flame retardancy and heat resistance in terms, e.g., of heat deflection temperature. The flame retardant synthetic resin composition of the invention can be molded by any known molding techniques, such as extrusion, calendering, injection, rolling, compression, and blown-film extrusion, to provide products of various forms, such as plates, sheets, films, or any other irregular shapes.

The flame retardant synthetic resin composition of the invention is used to make housings (e.g., frames, cases, covers, and enclosures) or parts of electric vehicles, machinery, electric/electronic equipment, OA equipment, and the like, and automotive interior and exterior parts.

The flame retardant synthetic resin composition of the invention and molded products thereof find wide applications in various industrial fields, including electric & elecronics, communications, agriculture, forestry, fisheries, mining, construction, foods, fibers, clothing, remedy, coal, petroleum, rubber, leather, automobiles, precision equipment, lumber, building materials, civil engineering, furniture, printing, musical instruments, and so on. Specifically, the applications include desk and OA equipment, such as printers, personal computers, word processors, keyboards, PDAs (personal digital assistants), telephone sets, copiers, fax machines, ECRs (electronic cash registers), calculators, electronic diaries, cards, holders, and writing tools; household electric appliances, such as laundry machines, refrigerators, vacuum cleaners, microwave ovens, lighting equipment, game machines, irons, and *kotatsu*; audio and visual equipment, such as TV sets, VTRs, camcorders, radio-cassette recorders, tape recorders, mini discs, CD players, speakers, and liquid crystal displays; electric and electronic components and communication devices, such as connectors, relays, capacitors, switches, printed circuit boards, coil bobbins, semiconductor sealants, LED sealants, electric wire, cables, transformers, deflection yokes, distribution boards, and clocks; housings (frames, cases, covers, and enclosures) and parts of OA equipment; and automotive interior and exterior parts.

The flame retardant synthetic resin composition of the invention and its molded products are also useful in various applications, including materials for petrol vehicles, hybrid vehicles, electrical vehicles, train cars, boats, ships, aircrafts, buildings, and houses, such as seats (stuffing and upholstery), belts, ceiling covering, convertible tops, arm rests, door trims, rear package trays, rugs, mats, sun visors, wheel covers, mattress covers, air bags, insulating materials, assist grips, assist straps, wire covering, electrical insulators, paints, coatings, overlays, flooring, inside corner moldings, carpet, wallpaper, wall covering, exterior covering, interior covering, roofing, decks, walls, pillars, floor plates, fences, frames and moldings, profiles for windows and doors, roof shingles, siding boards, terraces, balconies, soundproofing boards, heat insulating boards, and window boards; civil engineering materials; and housewares and sporting equipment, such as clothing, curtains, bed sheets, chip boards, fiber boards, carpet and rugs, doormats, sheets, buckets, hoses, containers, glasses, bags, cases, goggles, skis, rackets, tents, and musical instruments.

### EXAMPLES

The invention will now be illustrated in greater detail with reference to Examples and Comparative Examples. Unless otherwise noted, all the parts and percents are by mass.

### Synthesis of Phosphoric Ester Mixture-1 (Flame Retardant-1)

To 186.2 g (1 mol) of 4,4'-dihydroxybiphenyl was added 0.95 g (0.01 mol) of magnesium chloride as a catalyst, and 600.3 g (2.7 mol) of phosphorus oxychloride was added thereto, followed by heating at 80° to 100°C to cause reaction for 3 hours. The excess of phosphorus oxychloride was removed by evaporation under reduced pressure, and 376.4 g (4.0 mol) of phenol was added to the residue, followed by heating at 120° to 140°C to cause reaction for 7 hours. The resulting crude product was dissolved in xylene, washed with an acid aqueous solution, and dewatered. Solvent removal gave phosphoric ester mixture-1, which was identified to be a mixture of phosphoric esters represented by formula (1) as a result of IR and NMR analyses.

The phosphoric ester mixture-1 was further analyzed by liquid chromatography under the conditions described below. As a result, the ratio of the compound of formula (1) wherein n = 1 to the total of the compounds of formula (1) wherein n = 1 to 5 in the phosphoric ester mixture -1 was found to be 70.5%. The ratios of the other compounds wherein n = 2, 3, 4, and 5 were 22.2%, 5.6%, 1.6%, and 0.1 %, respectively.

The resulting phosphoric ester mixture-1 has liquid at 25°C.

The melt viscosity of the resulting phosphoric ester mixture-1 was measured by the method described below.

### Synthesis of Phosphoric Ester Mixture-2 (Flame Retardant-2)

To 186.2 g (1 mol) of 4,4'-dihydroxybiphenyl was added 0.95 g (0.01 mol) of magnesium chloride as a catalyst, and 644.8 g (2.9 mol) of phosphorus oxychloride was added thereto, followed by heating at 80° to 100°C to cause reaction for 3 hours. The excess of phosphorus oxychloride was removed by evaporation under reduced pressure, and 376.4 g (4.0 mol) of phenol was added to the residue, followed by heating at 120° to 140°C to cause reaction for 7 hours. The resulting crude product was dissolved in xylene, washed with an acid aqueous solution, and dewatered. Solvent removal gave phosphoric ester mixture-2, which was identified to be a mixture of phosphoric esters represented by formula (1) as a result of IR and NMR analyses.

The phosphoric ester mixture-2 was further analyzed by liquid chromatography under the conditions described below. As a result, the ratio of the compound of formula (1) wherein n = 1 to the total of the compounds of formula (1) wherein n = 1 to 5 in the phosphoric ester mixture -2 was found to be 72.4%. The ratios of the other compounds wherein n = 2, 3, 4, and 5 were 20.9%, 5.4%, 1.3%, and 0%, respectively.

The resulting phosphoric ester mixture-2 has liquid at 25°C.

The melt viscosity of the resulting phosphoric ester mixture-2 was measured by the method described below.

### Synthesis s of Phosphoric Ester Mixture-3 (Flame Retardant-3)

To 186.2 g (1 mol) of 4,4'-dihydroxybiphenyl was added 0.95 g (0.01 mol) of magnesium chloride as a catalyst, and 667.0 g (3.0 mol) of phosphorus oxychloride was added thereto, followed by heating at 80° to 100°C to cause reaction for 3 hours. The excess of phosphorus oxychloride was removed by evaporation under reduced pressure, and 376.4 g (4.0 mol) of phenol was added to the residue, followed by heating at 120° to 140°C to cause reaction for 7 hours. The resulting crude product was dissolved in xylene, washed with an acid aqueous solution, and dewatered. Solvent removal gave phosphoric ester mixture-3, which was identified to be a mixture of phosphoric esters represented by formula (1) as a result of IR and NMR analyses.

The phosphoric ester mixture-3 was further analyzed by liquid chromatography under the conditions described below. As a result, the ratio of the compound of formula (1) wherein n = 1 to the total of the compounds of formula (1) wherein n = 1 to 5 in the phosphoric ester mixture -3 was found to be 74.5%. The ratios of the other compounds wherein n = 2, 3, 4, and 5 were 20.1%, 4.5%, 0.9%, and 0%, respectively.

The resulting phosphoric ester mixture-3 has liquid at 25°C.

The melt viscosity of the resulting phosphoric ester mixture-3 was measured by the method described below.

### Synthesis s of Comparative Phosphoric Ester Mixture-4 (Flame Retardant-4)

To 186.2 g (1 mol) of 4,4'-dihydroxybiphenyl was added 0.95 g (0.01 mol) of magnesium chloride as a catalyst, and 778.2 g (3.5 mol) of phosphorus oxychloride was added thereto, followed by heating at 80° to 100°C to cause reaction for 3 hours. The excess of phosphorus oxychloride was removed by evaporation under reduced pressure, and 376.4 g (4.0 mol) of phenol was added to the residue, followed by heating at 120° to 140°C to cause reaction for 7 hours. The resulting crude product was dissolved in xylene, washed with an acid aqueous solution, and dewatered. Solvent removal gave comparative phosphoric ester mixture-4, which was identified to be a mixture of phosphoric esters represented by formula (1) as a result of IR and NMR analyses.

The phosphoric ester mixture-4 was further analyzed by liquid chromatography under the conditions described below. As a result, the ratio of the compound of formula (1) wherein n = 1 to the total of the compounds of formula (1) wherein n = 1 to 5 in the phosphoric ester mixture -4 was found to be 76.0%. The ratios of the other compounds wherein n = 2, 3, 4, and 5 were 19.2%, 4.1%, 0.7%, and 0%, respectively.

The resulting phosphoric ester mixture-4 has liquid at 25°C.

The melt viscosity of the resulting phosphoric ester mixture-4 was measured by the method described below.

### Synthesis s of Comparative Phosphoric Ester Mixture-5 (Flame Retardant-5)

To 186.2 g (1 mol) of 4,4'-dihydroxybiphenyl was added 0.95 g (0.01 mol) of magnesium chloride as a catalyst, and 844.9 g (3.8 mol) of phosphorus oxychloride was added thereto, followed by heating at 80° to 100°C to cause reaction for 3 hours. The excess of phosphorus oxychloride was removed by evaporation under reduced pressure, and 376.4 g (4.0 mol) of phenol was added to the residue, followed by heating at 120° to 140°C to cause reaction for 7 hours. The resulting crude product was dissolved in xylene, washed with an acid aqueous solution, and dewatered. Solvent removal gave comparative phosphoric ester mixture-5, which was identified to be a mixture of phosphoric esters represented by formula (1) as a result of IR and NMR analyses.

The comparative phosphoric ester mixture-5 was further analyzed by liquid chromatography under the conditions described below. As a result, the ratio of the compound of formula (1) wherein n = 1 to the total of the compounds of formula (1) wherein n = 1 to 5 in the comparative phosphoric ester mixture-5 was found to be 80.1%. The ratios of the other compounds wherein n = 2, 3, 4, and 5 were 16.8%, 2.8%, 0.3%, and 0%, respectively.

The resulting comparative phosphoric ester mixture-5 has solid at 25°C.

The melt viscosity of the resulting phosphoric ester mixture-5 was measured by the method described below.

### Synthesis of Comparative Phosphoric Ester Mixture-6 (Flame Retardant-6)

To 186.2 g (1 mol) of 4,4'-dihydroxybiphenyl was added 0.95 g (0.01 mol) of magnesium chloride as a catalyst, and 1334.0 g (6.0 mol) of phosphorus oxychloride was added thereto, followed by heating at 80° to 100°C to cause reaction for 3 hours. The excess of phosphorus oxychloride was removed by evaporation under reduced pressure, and 376.4 g (4.0 mol) of phenol was added to the residue, followed by heating at 120° to 140°C to cause reaction for 7 hours. The resulting crude product was dissolved in xylene, washed with an acid aqueous solution, and dewatered. Solvent removal gave comparative phosphoric ester mixture-6, which was identified to be a mixture of phosphoric esters represented by formula (1) as a result of IR and NMR analyses.

The comparative phosphoric ester mixture-6 was further analyzed by liquid chromatography under the conditions described below. As a result, the ratio of the compound of formula (1) wherein n = 1 to the total of the compounds of formula (1) wherein n = 1 to 5 in the comparative phosphoric ester mixture-6 was found to be 87.4%. The ratios of the other compounds wherein n = 2, 3, 4, and 5 were 11.2%, 1.4%, 0%, and 0%, respectively.

The resulting comparative phosphoric ester mixture-6 has solid at 25°C.

The melt viscosity of the resulting comparative phosphoric ester mixture-6 was measured by the method described below.

### Synthesis of Comparative Phosphoric Ester Mixture-7 (Flame Retardant-7)

To 186.2 g (1 mol) of 4,4'-dihydroxybiphenyl was added 0.95 g (0.01 mol) of magnesium chloride as a catalyst, and 555.8 g (2.5 mol) of phosphorus oxychloride was added thereto, followed by heating at 80° to 100°C to cause reaction for 3 hours. The excess of phosphorus oxychloride was removed by evaporation under reduced pressure, and 376.4 g (4.0 mol) of phenol was added to the residue, followed by heating at 120° to 140°C to cause reaction for 7 hours. The resulting crude product was dissolved in xylene, washed with an acid aqueous solution, and dewatered. Solvent removal gave comparative phosphoric ester mixture-7, which was identified to be a mixture of phosphoric esters represented by formula (1) as a result of IR and NMR analyses.

The comparative phosphoric ester mixture-7 was further analyzed by liquid chromatography under the conditions described below. As a result, the ratio of the compound of formula (1) wherein n = 1 to the total of the compounds of formula (1) wherein n = 1 to 5 in the comparative phosphoric ester mixture-6 was found to be 66.5%. The ratios of the other compounds wherein n = 2, 3, 4, and 5 were 24.1%, 7.0%, 2.1%, and 0.3%, respectively.

The resulting comparative phosphoric ester mixture-7 has solid at 25°C.

The melt viscosity of the resulting comparative phosphoric ester mixture-7 was measured by the method described below.

### Synthesis of Comparative Phosphoric Ester Mixture-8 (Flame Retardant-8)

To 186.2 g (1 mol) of 4,4'-dihydroxybiphenyl was added 0.95 g (0.01 mol) of magnesium chloride as a catalyst, and 555.8 g (2.2 mol) of phosphorus oxychloride was added thereto, followed by heating at 80° to 100°C to cause reaction for 3 hours. The excess of phosphorus oxychloride was removed by evaporation under reduced pressure, and 376.4 g (4.0 mol) of phenol was added to the residue, followed by heating at 120° to 140°C to cause reaction for 7 hours. The resulting crude product was dissolved in xylene, washed with an acid aqueous solution, and dewatered. Solvent removal gave comparative phosphoric ester mixture-8, which was identified to be a mixture of phosphoric esters represented by formula (1) as a result of IR and NMR analyses.

The comparative phosphoric ester mixture-8 was further analyzed by liquid chromatography under the conditions described below. As a result, the ratio of the compound of formula (1) wherein n = 1 to the total of the compounds of formula (1) wherein n = 1 to 5 in the comparative phosphoric ester mixture-6 was found to be 64.0%. The ratios of the other compounds wherein n = 2, 3, 4, and 5 were 24.9%, 8.1%, 2.5%, and 0.5%, respectively.

The resulting comparative phosphoric ester mixture-8 has solid at 25°C.

The melt viscosity of the resulting comparative phosphoric ester mixture-8 was measured by the method described below.

### Conditions of liquid chromatography

### Chromatography equipment:

Eluent pump: PU-2089 PLUS, from JASCO
Detector: MD-2018 PLUS, from JASCO
Column: Pegasil ODS 4.6 mm ID × 250 mm L
Column temperature: 40°C
Detection wavelength: 261 nm
Eluent: MeOH/0.3% phosphoric acid aqueous solution

### Examples 1 to 3 and Comparative Examples 1 to 6

Flame retardant polycarbonate resin compositions were prepared according to the formulations shown in Table 1. Each composition was extruded and pelletized under the conditions below. The resulting pellets were injection molded under the conditions below to obtain specimens for UL flammability 94V test and HDT test.

An HDT test (flatwise testing) and the UL-94V test were conducted using the specimens according to the testing methods described below. The results obtained are shown in Table 1.

### Extrusion conditions:

Extruder: PCM30-38-3V-ISE, from Ikegai Corp.
Temperature: 280°C
Screw: twin
Number of rotation: 100 rpm

### Injection molding conditions:

Horizontal injection molding machine: NEX-80-9E, from Nissei Plastic Industrial Co., Ltd.
Temperature: 280°C
Mold temperature: 80°C

### HDT testing method:

An automatic HDT tester from Toyo Seiki Co., Ltd. was used. The specimen (80 mm long, 10 mm wide, 4 mm thick) was tested in flatwise position at a bending stress of 1.8 MPa and a heating rate of 120°C/hr. The temperature at which the deflection reached 0.34 mm was recorded as a heat defection temperature (HDT).

### Method for measuring melt viscosity:

The viscosity of a sample was measured using a Brookfield viscometer available from Tokyo Keiki Inc. after it was conditioned in a thermostat at 80°C for 1 hour. A No. 3 rotor was used. The number of rotation was 60 rpm.

### UL-94V testing method:

The specimen (127 mm long, 12.7 mm wide, 1.6 mm thick) was hung vertically. A flame of a burner was applied to the lower end of the specimen for 10 seconds, then removed, and the flame duration was recorded. The flame was placed again for another 10 second period, and the flame duration was noted. Ignition of the cotton layer placed below the specimen by any drips of flaming particles was also observed.

The flame duration after each flame application and the ignition of the cotton layer were interpreted into a UL-94 flammability rating. The V-0 rating is the lowest flammability The V-1 rating is less flame retardancy, and V-2 rating is still less flame retardancy. A specimen that was not interpreted into any of these ratings was rated "NR".

**Table 1**

| | Example | | | Comparative Example | | | | | |
|---|---|---|---|---|---|---|---|---|---|
| | 1 | 2 | 3 | 1 | 2 | 3 | 4 | 5 | 6 |
| Polycarbonate*1 | 100 | 100 | 100 | 100 | 100 | 100 | 100 | 100 | 100 |
| Anti-drip agent*2 | 0.3 | 0.3 | 0.3 | 0.3 | 0.3 | 0.3 | 0.3 | 0.3 | 0.3 |
| Phosphoric ester mixture-1 | 3.5 | | | | | | | | |
| Phosphoric ester mixture-2 | | 3.5 | | | | | | | |
| Phosphoric ester mixture-3 | | | 3.5 | | | | | | |
| Comparative Phosphoric ester mixture-4 | | | | | 3.5 | | | | |
| Comparative Phosphoric ester mixture-5 | | | | | | 3.5 | | | |
| Comparative Phosphoric ester mixture-6 | | | | | | | 3.5 | | |
| Comparative Phosphoric ester mixture-7 | | | | | | | | 3.5 | |
| Comparative Phosphoric ester mixture-8 | | | | | | | | | 3.5 |
| Melt Viscosity (mPa.sec) | 149 | 141 | 140 | - | 132 | 118 | 109 | 172 | 220 |
| HDT (°C) | 120 | 120 | 119 | 124 | 116 | 115 | 115 | 119 | 120 |
| UL-94V Rating | V-0 | V-0 | V-0 | V-2 | V-0 | V-0 | V-0 | V-0 | V-0 |

| | | | | | | | | | |
|---|---|---|---|---|---|---|---|---|---|
| *1: Jupilon E-2000FN, from Mitsubishi Engineering-Plastics Corp. *2: Polytetrafluoroethylene | | | | | | | | | |

## Claims

1. A flame retardant synthetic resin composition comprising 100 parts by mass of a synthetic resin and 0.5 to 20 parts by mass of a mixture of phosphoric esters represented by general formula (1): 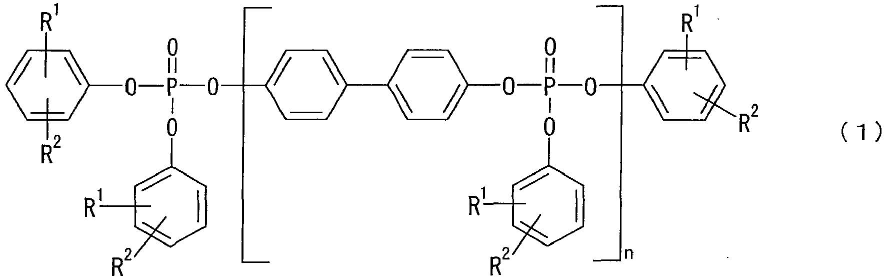
wherein R¹ and R² each independently represent a hydrogen atom or a methyl group; and n represents an integer of 1 to 5,
the mixture containing 70% to 75% by mass of the phosphoric ester of formula (1) wherein n = 1, with the total of the phosphoric esters of formula (1) wherein n is 1 to 5 being taken as 100% by mass.

2. The flame retardant synthetic resin composition according to claim 1, wherein R¹ and R² in formula (1) are each hydrogen.

3. The flame retardant synthetic resin composition according to claim 1 or 2, wherein the synthetic resin is polycarbonate.

4. A molded product obtained from the flame retardant synthetic resin composition according to any one of claims 1 to 3.

## Patentansprüche

1. Flammhemmende Kunstharzzusammensetzung, umfassend 100 Massenteile eines Kunstharzes und 0,5 bis 20 Massenteile eines Gemisches aus Phosphorsäureestern, die durch die allgemeine Formel (1) dargestellt sind: 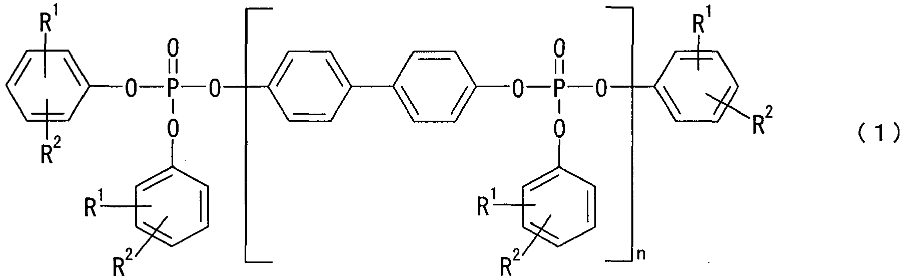
wobei R¹ und R² jeweils unabhängig voneinander ein Wasserstoffatom oder eine Methylgruppe darstellen; und n eine ganze Zahl von 1 bis 5 darstellt,
wobei das Gemisch 70 Masse-% bis 75 Masse-% des Phosphorsäureesters der Formel (1), wobei n = 1 ist, enthält, wobei die Gesamtheit der Phosphorsäureester der Formel (1), bei denen n gleich 1 bis 5 ist, als 100 Massen-% angenommen wird.

2. Die flammhemmende Kunstharzzusammensetzung nach Anspruch 1, wobei R¹ und R² in der Formel (1) jeweils ein Wasserstoffatom sind.

3. Die flammhemmende Kunstharzzusammensetzung nach Anspruch 1 oder 2, wobei das Kunstharz ein Polycarbonat ist.

4. Geformtes Produkt, erhalten aus der flammhemmenden Kunstharzzusammensetzung gemäß einem der Ansprüche 1 bis 3.

## Revendications

1. Composition de résine synthétique retardatrice d'inflammation comprenant 100 parties en masse d'une résine synthétique et 0,5 à 20 parties en masse d'un mélange d'esters d'acide phosphorique représentés par la formule générale (1) : 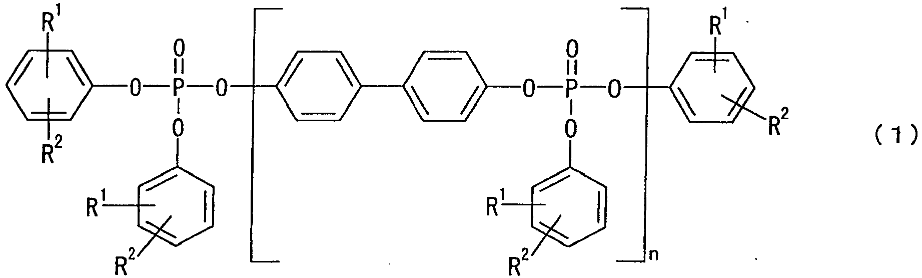
dans laquelle chacun de R¹ et R² représente indépendamment un atome d'hydrogène ou un groupe méthyle ; et n représente un entier de 1 à 5,
le mélange contenant 70 % à 75 % en masse de l'ester d'acide phosphorique de formule (1) dans lequel n = 1, le total des esters d'acide phosphorique de formule (1) dans lesquels n vaut de 1 à 5 étant considéré être de 100 % en masse.

2. Composition de résine synthétique retardatrice d'inflammation selon la revendication 1, dans laquelle chacun de R¹ et R² dans la formule (1) est l'hydrogène.

3. Composition de résine synthétique retardatrice d'inflammation selon la revendication 1 ou 2, dans laquelle la résine synthétique est un polycarbonate.

4. Produit moulé obtenu à partir de la composition de résine synthétique retardatrice d'inflammation selon l'une quelconque des revendications 1 à 3.
